# EUROPEAN PATENT APPLICATION

(11) **EP 3 522 266 A1**
(43) Date of publication of application: **07.08.2019**
(21) Application number: 17855437.4
(22) Date of filing: 04.08.2017
(51) Int. Cl.: H01M 4/13

(54) **LITHIUM-ION SECONDARY BATTERY AND STORAGE DEVICE**

(30) Priority: 30.09.2016 JP 2016195195
(71) Applicant: Hitachi Automotive Systems, Ltd., Hitachinaka-shi, Ibaraki 312-8503 (JP)
(72) Inventor: NISHIMURA Katsunori, Tokyo 100-8280 (JP); SUZUKI Shuichi, Tokyo 100-8280 (JP); KUBOTA Osamu, Tokyo 100-8280 (JP); FUKUCHI Kunio, Tokyo 100-8280 (JP); KIFUNE Motonari, Hitachinaka-shi Ibaraki 312-8503 (JP); TSUNAKI Takuro, Hitachinaka-shi Ibaraki 312-8503 (JP)
(74) Representative: MERH-IP Matias Erny Reichl Hoffmann Patentanwälte PartG mbB
(86) International application number: PCT/JP2017/028350
(87) International publication number: WO 2018/061479

(57) **Abstract**

When a short circuit occurs in a lithium-ion secondary battery, a short circuit current is reduced to suppress temperature rise of the battery. In order to solve the above problem, a lithium-ion battery of the present invention includes an electrode having a mixture layer and a heat resistant layer disposed on the mixture layer and containing ceramic particles. The heat resistant layer includes a crosslinked resin, and the amount of the crosslinked resin is less than 10% by weight with respect to the sum of the amount of the ceramic particles and the amount of the crosslinked resin.

## Description

### Technical Field

The present invention relates to a lithium-ion secondary battery and a storage system including the lithium-ion secondary battery.

### Background Art

A lithium-ion secondary battery has a higher energy density than other secondary batteries and are attracting attention as a battery for an electric vehicle and power storage. For example, the lithium-ion secondary battery is adopted in various electric vehicles such as a zero-emission electric vehicle not equipped with an engine, a hybrid electric vehicle equipped with both an engine and a secondary battery, and a plug-in hybrid electric vehicle that directly charges the vehicle from a power system. In addition, the lithium-ion secondary battery is also expected to be applied to a stationary power storage system that stores power and supplies the power in an emergency when a power system is interrupted.

In such a wide range of applications, a lithium-ion secondary battery with a higher energy density is required and is being developed. Particularly in a hybrid electric vehicle, a plug-in hybrid electric vehicle, and an electric vehicle, high input/output characteristics and a high energy density are required, and difficulty in safety design of a battery is also high. A more sophisticated technique for securing safety of the lithium-ion secondary battery is required.

One of means for solving such a problem is a mechanism for detecting a temperature of a large amount of heat generated inside a battery and interrupting a current. Examples thereof include a positive temperature coefficient (PTC) element. In a case of a lithium-ion secondary battery having a small capacity, it is possible to insert a PTC element between an external terminal and an electrode. This is because voltage drop in the PTC element is small due to a small current. However, in a case of an electric vehicle or a stationary storage battery system, a large current flows, and therefore a PTC element cannot be incorporated in the circuit. Therefore, a method in which a PTC function is added to an electrode has been devised.

PTL 1 discloses a technique of forming an inorganic particle layer to be disposed on a surface of a positive electrode and suppressing a micro short circuit between the positive electrode and a negative electrode.

PTL 2 discloses a technique of improving high-temperature storage characteristics by disposing an inorganic particle layer containing inorganic particles 3 that do not occlude or release lithium, a conductive material, and a binder on a surface of a negative electrode, and forming an electrical conduction path in contact with the surface of the negative electrode in the inorganic particle layer with the conductive material.

Furthermore, PTL 3 discloses a method for forming a heat resistant layer containing boehmite in a separator to prevent oxidative decomposition of the separator leading to an internal short circuit and deterioration of battery characteristics.

PTL 4 discloses a technique of preparing a ceramic layer in a portion where an electrode is not formed and suppressing a short circuit between a positive electrode and a negative electrode due to a burr generated at the time of tab welding.

### Citation List

### Patent Literature

PTL 1: JP 2009-302009 A
PTL 2: JP 2008-226605 A
PTL 3: JP 2013-73678 A
PTL 4: JP 2008-243708 A

### Summary of Invention

### Technical Problem

Safety of a lithium-ion secondary battery can be improved by the techniques described in PTLs 1 to 4. However, if a positive electrode and a negative electrode are locally short-circuited by any method according to a conventional technique, the temperature of the short-circuited portion rises to several hundreds of degrees in a short time. Therefore, an insulating layer having better heat resistance than the conventional technique is necessary.

The present invention has been achieved in view of the above problems, and has heat resistance of several hundred degrees or higher even if a short circuit locally occurs, and effectively suppresses a short circuit between a positive electrode and a negative electrode. An object of the present invention is to provide a lithium-ion secondary battery forming a ceramic layer having excellent heat resistance on a surface of a negative electrode and having a mechanism for suppressing a short circuit between a positive electrode and the negative electrode, and a storage system using the lithium-ion secondary battery.

### Solution to Problem

In a lithium-ion secondary battery including a positive electrode having a positive electrode mixture layer, a negative electrode having a negative electrode mixture layer, and an electrolytic solution, the above-described technical problems can be solved by applying the following means.

A first means is a secondary battery including an electrode having a mixture layer and a heat resistant layer disposed on the mixture layer and containing ceramic particles, in which the heat resistant layer includes a crosslinked resin, and the amount of the crosslinked resin is less than 10% by weight with respect to the sum of the amount of the ceramic particles and the amount of the crosslinked resin.

A second means is the secondary battery in which the amount of the crosslinked resin is 1 to 5% by weight with respect to the sum of the amount of the ceramic particles and the amount of the crosslinked resin.

A third means is the secondary battery in which the ceramic particles have an average particle diameter of 5 µm or more.

A fourth means is the secondary battery in which the thickness of the heat resistant layer is 2 to 4 times the average particle diameter of the ceramic particles.

A fifth means is the secondary battery in which the crosslinked resin includes at least one of an acrylic resin and an imide resin.

A sixth means is the secondary battery in which the crosslinked resin has an ester bond.

### Advantageous Effects of Invention

According to the lithium-ion secondary battery of the present invention, the temperature rise of the battery is suppressed at the time of a short circuit, and safety is improved.

### Brief Description of Drawings

FIG. 1 is a schematic cross-sectional view illustrating an example of a lithium-ion secondary battery according to an embodiment of the present invention.
FIG. 2 is a cross-sectional structural view of a negative electrode illustrated in FIG. 1.
FIG. 3 is a schematic diagram illustrating a manufacturing method for forming a ceramic layer on a surface of a negative electrode.
FIG. 4 is a block diagram illustrating a schematic configuration of a battery module including the lithium-ion secondary battery illustrated in FIG. 1.

### Description of Embodiments

### (Lithium-ion secondary battery)

Hereinafter, a lithium-ion secondary battery of the present invention will be described in detail with reference to the drawings.

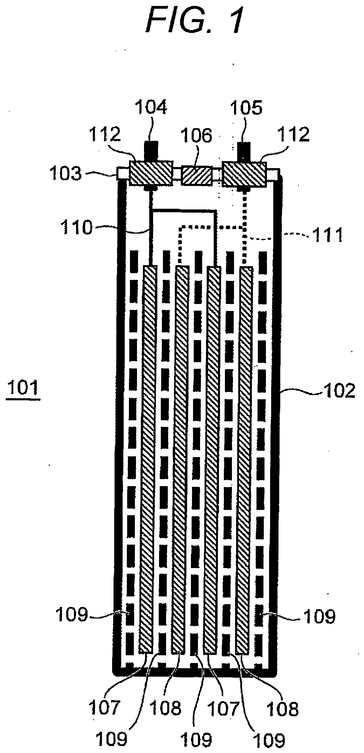

FIG. 1 is a cross-sectional view schematically illustrating a schematic configuration of a lithium-ion secondary battery 100 of the present embodiment.

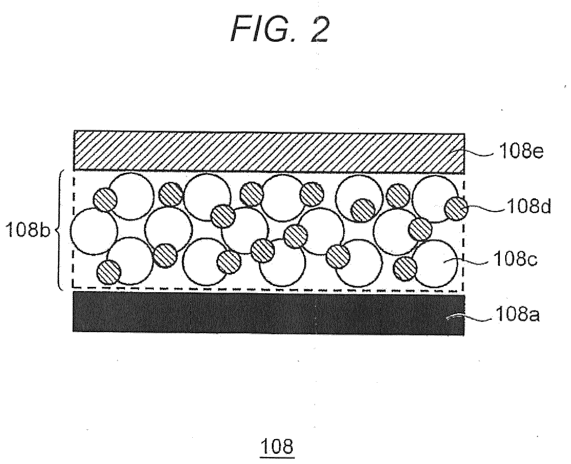

The lithium-ion secondary battery 100 has a configuration in which an electrode group 101 is housed in a battery container 102 in a sealed state. The electrode group 101 is an assembly including a positive electrode 107, a negative electrode 108, and a separator 109. The negative electrode 108 has a ceramic layer of the present invention formed on a surface thereof, and details thereof will be described later with reference to FIG. 2.

The electrode group 101 can adopt various configurations such as a configuration in which strip-shaped electrodes are laminated and a configuration in which a belt-shaped electrode is wound to be formed into a cylindrical shape or a flat shape. For the battery container 102, any shape such as a cylindrical shape, a flat oblong shape, or a rectangular shape can be selected corresponding to the shape of the electrode group 101. The battery container 102 houses the electrode group 101 from an opening formed in an upper portion, and then the opening is closed and sealed with a lid 103.

An outer edge of the lid 103 is joined to the opening of the battery container 102, for example, by welding, caulking, or bonding over the entire periphery thereof to seal the battery container 102 in a sealed state. The lid 103 has an injection port for injecting an electrolytic solution L into the battery container 102 after sealing the opening of the battery container 102. The injection port is sealed with an injection stopper 106 after the electrolytic solution is injected into the battery container 102. A safety mechanism can also be imparted to the injection stopper 106. As the safety mechanism, a pressure valve for releasing the pressure inside the battery container 102 may be disposed.

A positive electrode external terminal 104 and a negative electrode external terminal 105 are fixed to the lid 103 via an insulating sealing member 112, and a short circuit between both the terminals 104 and 105 is prevented by the insulating sealing member 112. The positive electrode external terminal 104 is connected to the positive electrode 107 via a positive electrode lead wire 110, and the negative electrode external terminal 105 is connected to the negative electrode 108 via a negative electrode lead wire 111. A material of the lead wire insulating sealing member 112 can be selected from a fluorocarbon resin, a thermosetting resin, a glass hermetic seal, and the like, and any insulating material that does not react with the electrolytic solution L and has excellent airtightness can be used.

The electrode group is constituted by laminating the positive electrode 107 and the negative electrode 108 via the separator 109. The separator 109 is disposed between the positive electrode 107 and the negative electrode 108 to prevent a short circuit therebetween. Furthermore, the separator 109 is also inserted between the electrode group and the battery container 102 to prevent a short circuit between the positive electrode 107 and the negative electrode 108 via the battery container 102. An electrolytic solution is held on surfaces of the separator 109 and the electrodes 107 and 108 and inside pores thereof.

The electrode group is formed into a shape corresponding to the shape of the battery container 102. For example, in a case where the battery container 102 is cylindrical, the belt-shaped positive electrode 107 and negative electrode 108 laminated via the belt-shaped 109 are wound to form the electrode group into a cylindrical shape. In a case where the battery container 102 has a rectangular parallelepiped shape, for example, the rectangular sheet-shaped positive electrode 107 and negative electrode 108 are laminated via the separator 109 to form the electrode group into a rectangular parallelepiped shape. Incidentally, in a case where the battery container 102 has a rectangular parallelepiped shape, it is also possible to use the electrode group formed into a flat shape by winding the belt-shaped positive electrode 107 and negative electrode 108 laminated via the belt-shaped separator 109.

In a case where the battery container 102 is manufactured using a conductive material such as metal or carbon, an insulating sheet is inserted between an outer surface of the electrode group and an inner surface of the battery container 102 to prevent a short circuit between the positive electrode 107 and the negative electrode 108 via the battery container 102. In a case where the battery container 102 is made of a resin material or an aluminum laminate, these materials are insulative, and therefore the above-described insulating sheet is unnecessary.

As the separator 109, for example, a polyolefin-based polymer sheet made of polyethylene, polypropylene, or the like, or a multilayer structure sheet obtained by fusing a polyolefin-based polymer and a fluorine-based polymer sheet typified by polytetrafluoroethylene can be used. In addition, a mixture of ceramics and a binder may be formed into a thin layer shape on a surface of the separator 109 so as to prevent shrink of the separator 109 when the battery temperature rises. In order to cause lithium ions to pass through the separator 109 during charge/discharge of the lithium-ion secondary battery 100, the separator 109 preferably has, for example, a pore diameter of 0.01 µm or more and 10 µm or less and a porosity of 20% or more and 90% or less.

### (Configuration of negative electrode)

FIG. 2 illustrates a cross-sectional structure of the negative electrode 108 having a ceramic layer of the present invention formed thereon. The negative electrode 108 includes a negative electrode current collector 108a which is, for example, a copper foil and a negative electrode mixture layer 108b formed thereon. Examples of the negative electrode current collector 108a include a copper foil having a thickness of 10 µm or more and 100 µm or less, a copper perforated foil having a thickness of 10 µm or more and 100 µm or less and a pore diameter of 0.1 mm or more and 10 mm or less, an expanded metal, and a foamed metal plate. As a material of the negative electrode current collector 108a, a metal that does not form an alloy with lithium is desirable, and in addition to the above-described copper, stainless steel, nickel, titanium, or the like can be used. Incidentally, in the present embodiment, there is no particular limitation on the shapes of the positive and negative electrode current collectors 108a, a method for manufacturing the positive and negative electrode current collectors 108a, and the like.

The negative electrode mixture layer 108b includes a negative electrode active material 108c and a binder 108d. Typical examples of the negative electrode active material 108c include natural graphite, artificial graphite, amorphous carbon, aluminum, silicon, and tin. The binder 108d binds particles of the negative electrode active material 108c to each other.

A ceramic layer 108e of the present invention is formed on the negative electrode mixture layer 108b. The ceramic layer 108e consists of ceramic particles and a binder that binds the ceramic particles to each other.

### (Preparation of positive electrode)

The positive electrode 107 consists of a positive electrode active material, a conductive agent, and a binder, and is formed on a positive electrode current collector.

Typical examples of the positive electrode active material include LiCoO₂, LiNiO₂, and LiMn₂O₄. Examples of the positive electrode active material 107a further include LiMnO₃, LiMn₂O₃, LiMnO₂, Li₄Mn₅O₁₂, LiMn₂₋ₓMₓO₂ (M = Co, Ni, Fe, Cr, Zn, or Ta and x = 0.01 to 0.2), Li₂Mn₃MO₈ (M=Fe, Co, Ni, Cu, or Zn), Li₁₋ₓAₓMn₂O₄ (A = Mg, Ba, B, Al, Fe, Co, Ni, Cr, Zn, or Ca and x = 0.01 to 0.1), LiNi₁₋ₓMₓO₂ (M = Co, Fe, or Ga and x = 0.01 to 0.2), LiFeO₂, Fe₂(SO₄)₃, LiCo₁₋ₓMₓO₂ (M = Ni, Fe, or Mn and x = 0.01 to 0.2), LiNi₁₋ₓMₓO₂ (M = Mn, Fe, Co, Al, Ga, Ca, or Mg and x = 0.01 to 0.2), Fe(MoO₄)₃, FeF₃, LiFePO₄, and LiMnPO₄. However, the present invention is not restricted by a material of the positive electrode at all, and therefore the positive electrode active material is not limited to these materials.

The particle diameter of the positive electrode active material is defined so as to be equal to or less than the thickness of the mixture layer formed on a surface of the positive electrode current collector. In a case where a positive electrode active material powder includes a coarse particle having a particle diameter equal to or larger than the thickness of the mixture layer, the coarse particle is removed by sieving classification, wind flow classification, or the like in advance, and a particle having an average particle diameter equal to or smaller than the thickness of the mixture layer is selected. Since the positive electrode active material is a powder, a binder for binding particles of the powder to each other is required in order to form the mixture layer.

In addition, when the positive electrode active material is an oxide, in general, the oxide has low conductivity (that is, high electric resistance), and therefore a carbon powder is added as a conductive agent to improve conductivity between particles of the oxide. As the binder, for example, polyvinylidene fluoride (hereinafter referred to as PVDF) can be used. As the binder, a binder dissolved in 1-methyl-2-pyrrolidone (hereinafter referred to as NMP) in advance can be used.

When the mixture layer is formed on a surface of the positive electrode current collector, first, a positive electrode active material, a conductive agent, and a binder are blended by setting a mixing ratio (expressed in weight percentage) thereamong such that, for example, the ratio of the positive electrode active material is 80% by weight or more and 95% by weight or less, the ratio of the conductive agent is 1% by weight or more and 10% by weight or less, and the ratio of the binder is 1% by weight or more and 10% by weight or less. The mixing ratio of the conductive agent is desirably 3% by weight or more in order to sufficiently exhibit conductivity and make charge/discharge of a large current possible. This reduces resistance of the entire positive electrode 107 and can reduce ohmic resistance loss when a large current flows. In order to improve the energy density of the lithium-ion secondary battery 100, it is desirable to set the mixing ratio of the positive electrode active material to a high range of 85% by weight or more and 95% by weight or less.

As the conductive agent, for example, a known material such as graphite, amorphous carbon, easily graphitizable carbon, carbon black, activated carbon, a conductive fiber, or a carbon nanotube can be used. Examples of the conductive fiber include a fiber manufactured by carbonizing vapor growing carbon or pitch (petroleum, coal, or a by-product such as coal tar) as a raw material at a high temperature and a carbon fiber manufactured from an acrylic fiber (polyacrylonitrile). As a material of the conductive agent, a material that is not oxidatively dissolved at a charge/discharge potential (usually 2.5 V or more and 2.8 V or less) of the positive' electrode is used. A metal material having lower electric resistance than the positive electrode active material, for example, a fiber made of a corrosion resistant metal such as titanium or gold, a carbide such as SiC or WC, or a nitride such as Si₃N₄ or BN may be used. The conductive agent can be manufactured by an existing manufacturing method such as a melting method or a chemical vapor deposition method. The conductive agent may coat a surface of the positive electrode active material to be integrated therewith.

Next, while the positive electrode active material, the NMP solution of the binder, and the conductive agent are stirred and mixed, NMP is added to prepare a slurry having smooth flowability. The slurry is applied to the positive electrode current collector, and the solvent is evaporated and dried. A method for applying the slurry to the positive electrode current collector is not particularly limited, and a known method such as a doctor blade method, a dipping method, or a spray method can be adopted. After the slurry is attached to the current collector, the organic solvent is evaporated and dried, and a positive electrode mixture layer formed on a surface of the positive electrode current collector is pressed and molded by roll press to prepare the positive electrode 107. By performing the process of application of the slurry to drying thereof a plurality of times, a plurality of the positive electrode mixture layers can be laminated on the positive electrode current collector.

### (Preparation of negative electrode and ceramic layer)

The negative electrode 108 includes a negative electrode current collector which is, for example, a copper foil and a negative electrode mixture layer formed on a surface of the negative electrode current collector. Examples of the negative electrode current collector include a copper foil having a thickness of 10 µm or more and 100 µm or less, a copper perforated foil having a thickness of 10 µm or more and 100 µm or less and a pore diameter of 0.1 mm or more and 10 mm, an expanded metal, and a foamed metal plate. As a material of the negative electrode current collector, in addition to copper, a metal and an alloy such as stainless steel or titanium can be used. Incidentally, in the present embodiment, there is no particular limitation on the material and the shape of the negative electrode current collector, a method for manufacturing the negative electrode current collector, and the like.

The negative electrode mixture layer includes a negative electrode active material and a binder, and may include a conductive agent as necessary. The negative electrode active material is a material that occludes and releases lithium ions. As a material capable of electrochemically occluding and releasing lithium ions, for example, a carbonaceous material such as natural graphite, artificial graphite, mesophase carbon, expanded graphite, a carbon fiber, a vapor growing method carbon fiber, a pitch-based carbonaceous material, needle coke, petroleum coke, a polyacrylonitrile-based carbon fiber, or carbon black, or an amorphous carbon material synthesized by thermal decomposition of a 5-membered or 6-membered cyclic hydrocarbon or a cyclic oxygen-containing organic compound can be used. As the negative electrode active material, for example, a graphite powder in which a graphite layer interval d₀₀₂ obtained from an X-ray diffraction peak of (002) plane is 0.35 nm or more and 0.36 nm or less can be used.

The negative electrode active material may be a mixture of materials such as graphite, easily graphitizable carbon, and hardly graphitizable carbon, or a mixture or a composite of the carbon material and the metal or the alloy. In addition, as the negative electrode active material, a conductive polymer material made of polyacene, polyparaphenylene, polyaniline, or polyacetylene can be used. Furthermore, the material can be combined with a carbon material having a graphene structure, such as graphite, easily graphitizable carbon, or hardly graphitizable carbon. Examples of the negative electrode active material usable in the present embodiment include aluminum, silicon, and tin to be alloyed with lithium, and further include a carbonaceous material made of graphite or amorphous carbon capable of electrochemically absorbing and releasing lithium ions. Lithium titanate (Li₄Ti₅O₁₂) can also be used as the negative electrode active material. In the present embodiment, the negative electrode active material is not particularly limited, and materials other than the above-described materials can also be used.

As the binder, polyvinylidene fluoride, a mixture of styrene-butadiene rubber (SBR) and sodium carboxymethylcellulose (CMC), polyacrylic acid or an alkali metal salt thereof, polyimide, polyacrylimide, and the like can be used. There is no restriction on the kind of the binder.

The weight ratio of the negative electrode active material is preferably smaller than 99% by weight from a viewpoint of sufficiently ensuring conductivity of the negative electrode 108 to make charge/discharge of a large current possible. In order to improve the energy density of the lithium-ion secondary battery 100, the weight ratio of the negative electrode active material is preferably larger than 90% by weight. In addition to the negative electrode active material and the binder, a conductive agent similar to the positive electrode mixture layer can be added as necessary. For example, in order to perform charge or discharge of a large current, it is desirable to add a small amount of a conductive agent to lower resistance of the negative electrode 108.

Next, while the negative electrode active material and the SBR binder aqueous solution are stirred and mixed, water and CMC are added to prepare a slurry having smooth flowability. The slurry is applied to the negative electrode current collector, and the solvent is evaporated and dried.

Thereafter, through a procedure similar to the above-described procedure of forming the positive electrode active material, the negative electrode 108 having the negative electrode mixture layer formed on a surface of the negative electrode current collector can be prepared. By performing the process of application of the slurry to drying thereof a plurality of times in a similar manner to the above-described positive electrode mixture layer, a plurality of the negative electrode mixture layers can be laminated on the negative electrode current collector.

For the ceramic layer of the present invention, ceramic particles and a binder are mixed, and a solvent is added thereto to prepare a slurry. In a case of performing curing by ultraviolet light, if a photopolymerization initiator, for example, a known additive such as Irgacure (registered trademark) 184 is used, it is possible to terminate polymerization of an acrylic monomer by irradiation with ultraviolet light for a short time.

For the ceramic particles, an insulating metal oxide such as alumina, boehmite, silica, or zirconia can be used. The average particle diameter is desirably 0.1 µm or more and 7 µm or less. If the average particle diameter is smaller than 0.1 µm, the specific surface area of the ceramic particles increases, and the binder becomes insufficient. As a result, the strength of the ceramic layer decreases. On the other hand, if the average particle diameter exceeds 7 µm, the ceramic particles become too thick, the diffusion length of a lithium ion increases, and the characteristics of the lithium-ion battery deteriorate. The average particle diameter is more preferably 1 µm or more. In order to promote scattering of ultraviolet light for ultraviolet curing of an acrylic monomer, the average particle diameter is desirably 5 µm or more. Incidentally, in a case of thermal polymerization, it is unnecessary to follow this limitation, and any size of 1 µm or more is applicable.

For the binder, an acrylic monomer to be subjected to crosslinking polymerization is used. The acrylic monomer has a double bond CH2=CH- at a terminal thereof, and this part forms a crosslinking bond with another monomer, and polymerization proceeds. This double bond is called a functional group. In the present invention, one monomer molecule desirably has one or more functional groups. As a result, a strong network is formed in a polymerization process described later, and ceramic particles are strongly bound to each other. Therefore, heat resistance is improved. The number of functional groups of 2 or more and 3 or less is more preferable because a three-dimensional network is formed. The amount of the binder to be added can be 0.1% by weight or more and 20% by weight or less with respect to the weight of the ceramic particles and the binder. If the amount of the binder is 1% by weight or more and 10% by weight or less, the ratio of the ceramic particles can be increased. Therefore, heat resistance of the ceramic layer is increased. If the amount of the binder is 1% by weight or more and 3% by weight or less, when the binder is carbonized due to local heat generation at the time of a short circuit, the amount of residual carbon in the ceramic layer can be reduced, and heat resistance of the ceramic layer is further improved.

As the solvent, water, 1-methyl-2-pyrrolidone, ethanol, vinyl alcohol, and the like can be used.

Addition of a known photopolymerization initiator (for example, 0.1% Irgacure (registered trademark) 184) is more desirable because an acrylic monomer is polymerized in a short time.

The slurry of the ceramic particle is applied to a surface of the negative electrode, and the solvent is dried to prepare the ceramic layer 108e on the negative electrode. Thereafter, the ceramic layer 108e is polymerized by heating or irradiation with ultraviolet rays to form a strong ceramic layer.

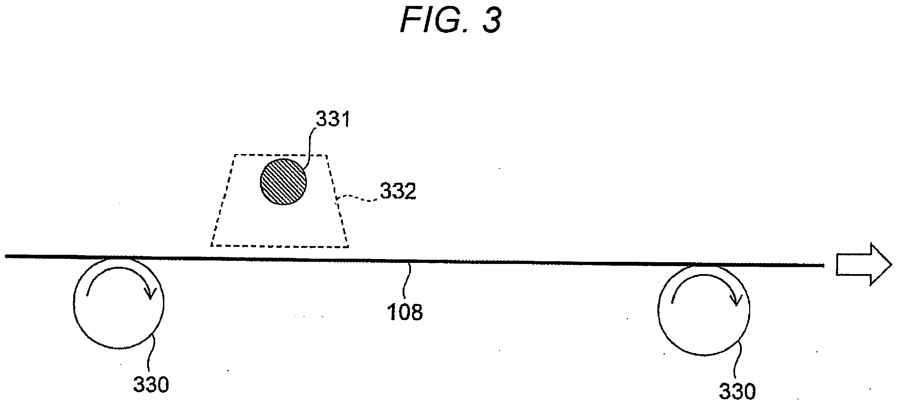

FIG. 3 illustrates a step of polymerizing an acrylic monomer contained in the ceramic layer. The negative electrode 108 obtained by applying the ceramic layer onto the negative electrode is moved in a horizontal direction by a transport mechanism 330. An ultraviolet lamp 331 is disposed in the middle of the movement path, and the surface of the negative electrode is irradiated with ultraviolet light. Disposition of an ultraviolet ray hood for preventing leak of ultraviolet rays to the outside is preferable because an efficient polymerization reaction can be promoted.

Using the negative electrode 108 in which the ceramic layer has been thus prepared, the process proceeds to the following step.

### (Electrode group and assembly of battery)

The electrode group 101 is connected to the external terminals 104 and 105 via the lead wires 110 and 111, respectively. Specifically, the positive electrode 107 is connected to the positive electrode external terminal 104 via the positive electrode lead wire 110, and the negative electrode 108 is connected to the negative electrode external terminal 105 via the negative electrode lead wire 111. Note that the shape of each of the lead wires 110 and 111 can be any shape such as a wire shape, a plate shape, or a foil shape as long as the shape does not extremely increase ohmic loss when a current flows. In addition, a material of each of the lead wires 110 and 111 can be any material as long as the material does not react an electrolytic solution.

A current interruption mechanism using a positive temperature coefficient (PTC) resistive element may be disposed in the middle of the positive electrode lead wire 110 or the negative electrode lead wire 111, at a connecting portion between the positive electrode lead wire 110 and the positive electrode external terminal 104, or at a connecting portion between the negative electrode lead wire 111 and the negative electrode external terminal 105. By disposing the current interruption mechanism, charge/discharge of the lithium-ion secondary battery 100 can be stopped, and the battery can be protected when the internal temperature of the lithium-ion secondary battery 100 rises.

A material of the battery container 102 is selected from materials that are corrosion resistant to a nonaqueous electrolyte, such as aluminum, stainless steel, and nickel plated steel. In a case where the battery container 102 is electrically connected to the positive electrode lead wire 110 or the negative electrode lead wire 111, materials of the lead wires 110 and 111 are selected such that a material does not change in quality due to corrosion of the battery container 102 or alloying with lithium ions in a portion in contact with the nonaqueous electrolyte.

In the lithium-ion secondary battery 100 of the present embodiment, the size of the battery container 102 is, for example, 100 mm in width, 70 mm in height, and 20 mm in depth, the area of the lid 103 is, for example, 20 cm², and the discharge capacity is, for example, 3 Ah or more. The volume of an electrolytic solution in the battery container 102 is, for example, 30 ml or more and 40 ml or less.

In the present Example, the 5 Ah lithium-ion secondary battery illustrated in FIG. 1 was assembled.

### (Preparation of electrolytic solution)

An electrolyte solvent includes two or more kinds selected from ethylene carbonate, dimethyl carbonate, ethyl methyl carbonate, and diethyl carbonate. Hereinafter, ethylene carbonate is referred to as "EC", dimethyl carbonate is referred to as "DMC", ethylmethyl carbonate is referred to as "EMC", and diethyl carbonate is referred to as "DEC". An electrolyte to be dissolved in the electrolyte solvent is, for example, lithium hexafluorophosphate (hereinafter referred to as "LiPF₆"), and the concentration thereof is, for example, 1 mol/liter.

Note that a solvent other than DMC may be used as a solvent of an electrolytic solution. Note that examples of other solvents that can be used for the electrolytic solution L include a nonaqueous solvent such as propylene carbonate, butylene carbonate, vinylene carbonate, γ-butyrolactone, diethyl carbonate, methylethyl carbonate, 1,2-dimethoxyethane, 2-methyltetrahydrofuran, dimethylsulfoxide, 1,3-dioxolane, formamide, dimethylformamide, methyl propionate, ethyl propionate, phosphoric acid triester, trimethoxymethane, dioxolane, diethyl ether, sulfolane, 3-methyl-2-oxazolidinone, tetrahydrofuran, 1,2-diethoxyethane, chloroethylene carbonate, or chloropropylene carbonate. A solvent other than these compounds may be used unless the solvent is decomposed on the positive electrode 107 and the negative electrode 108 of the lithium-ion secondary battery 100 of the present embodiment.

In the present embodiment, LiPF₆ is used as the electrolyte of the electrolytic solution, but another known compound can be arbitrarily used. Examples thereof include various lithium salts such as a lithium imide salt typified by LiBF₄, LiClO₄, LiCF₃SO₃, LiCF₃CO₂, LiAsF₆, LiSbF₆, or lithium trifluoromethanesulfonimide, LiNSO₂F, and Li(NSO₂)₂. Furthermore, LiB(CN)₄ can also be used. Nonaqueous electrolytic solutions obtained by dissolving these salts in the above-described solvents can be used as the electrolytic solution L for the battery. An electrolyte other than these compounds may be used unless the electrolyte is decomposed on the positive electrode 107 and the negative electrode 108 of the lithium-ion secondary battery 100 of the present embodiment.

### (Manufacture of battery module)

Next, a battery module including the lithium-ion secondary battery 100 of the present embodiment will be described.

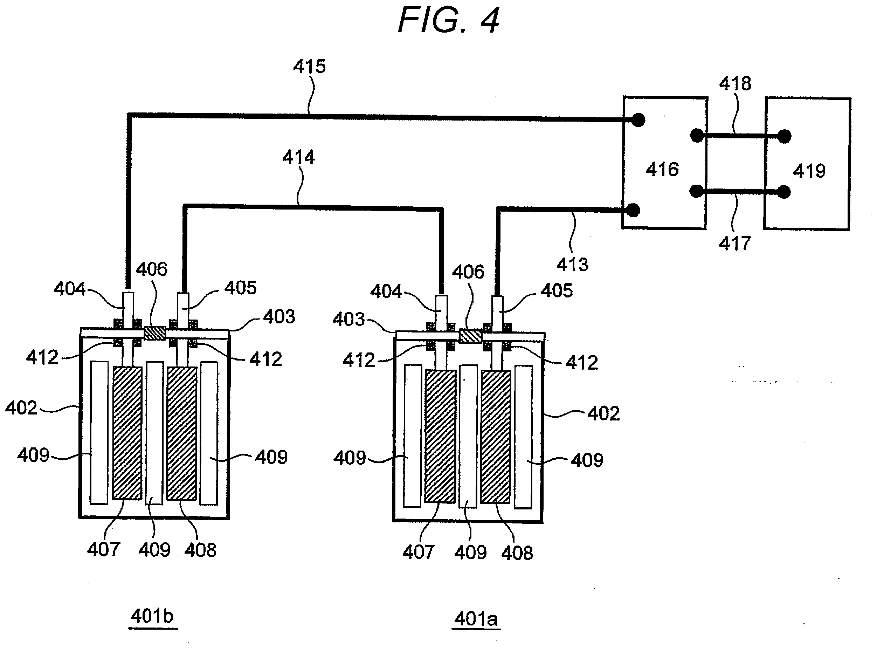

FIG. 4 is a block diagram illustrating a schematic configuration of a battery module including the lithium-ion secondary battery of the present embodiment.

The battery module includes a plurality of lithium-ion secondary batteries 401a and 401b each having the same configuration as the lithium-ion secondary battery described above.

A negative electrode external terminal 405 of the lithium-ion secondary battery 401a is connected to a negative electrode input terminal of a charge controller 416 via a power cable 413. A positive electrode external terminal 404 of the lithium-ion secondary battery 401a is connected to a negative electrode external terminal 405 of the lithium-ion secondary battery 401b via a power cable 414. A positive electrode external terminal 404 of the lithium-ion secondary battery 401b is connected to a positive electrode input terminal of a charge/discharge controller 416 via a power cable 415. With such a wire configuration, the two lithium-ion secondary batteries 401a and 401b can be charged or discharged.

The charge/discharge controller 416 exchanges power with an externally disposed device (hereinafter referred to as an external device 419) via power cables 417 and 418. The external device 419 is a motor for supplying power to the charge/discharge controller 416 and drives a hybrid electric vehicle or an electric vehicle.

At the time of stop, the external device 419 regenerates power and can return power to the charge/discharge controller 416. Using the returned power, the lithium-ion secondary batteries 401a and 401b are charged.

In addition to the motor, the external device 419 may be any one of various devices of an automobile, and may be any electric driven device.

The battery module performs ordinary charge to impart a rated capacity to each of the lithium-ion secondary batteries 401a and 401b. For example, constant voltage charge of 2.8 V can be performed for 0.5 hours with a charging current of one hour rate. Charging conditions are determined by design of the types of materials of the lithium-ion secondary batteries 401a and 401b, the amounts thereof to be used, and the like, and therefore optimum conditions are set for each battery' specification. After charging the lithium-ion secondary batteries 401a and 401b, the battery module switches the charge/discharge controller 210 to a discharge mode to discharge the batteries. Usually, the battery module stops discharge when the lithium-ion secondary batteries 401a and 401b reach a certain lower limit voltage.

As described above, the charge/discharge controller 416 functions as a control unit that controls a charge/discharge range of the lithium-ion secondary batteries 401a and 401b. The charge/discharge controller 416 preferably controls the charge/discharge range within a range of 10% or more and 90% or less with reference to the charge depths of the lithium-ion secondary batteries 401a and 401b.

This makes it possible to suppress temperature rise of the lithium-ion secondary battery more effectively and to improve safety without lowering battery performance.

In addition, the charge/discharge controller 416 may set the charge/discharge rate to a high rate equal to or less than 0.1 hour rate with reference to the charge depths of the lithium-ion secondary batteries 401a and 401b. Particularly, in a hybrid electric vehicle, a high charge/discharge rate is required.

The embodiment of the present invention has been described in detail with reference to the drawings above. However, the specific configuration is not limited to this embodiment. Even if there is a design change or the like within a range not deviating from the gist of the present invention, this change is included in the present invention.

### [Examples]

Next, Examples of the lithium-ion secondary battery of the present invention and a battery module including the lithium-ion secondary battery will be described.

### (Manufacture and evaluation of battery)

First, a plurality of lithium-ion secondary batteries having the configurations described in the above-described embodiment was manufactured. As the shape of a battery container, a cylindrical shape and a rectangular .shape were used.

LiNi_{1/3}Mn_{1/3}Co_{1/3}O₂ was selected as a positive electrode active material used for a positive electrode. The positive electrode active material had an average particle diameter of 5 µm. The weight composition of the positive electrode active material was 86%, and the weight composition of the binder was 7%. Carbon black as a conductive material was used for a conductive agent, and the weight composition thereof was 7%. Denka black (registered trademark) manufactured by Denka Company Limited was used as carbon black. Using an aluminum foil having a thickness of 10 µm as a positive electrode current collector, a slurry consisting of a positive electrode active material, a binder, and a conductive agent was applied with a blade coater to manufacture a positive electrode.

Graphite obtained by coating a surface of natural graphite with amorphous carbon was used as a negative electrode active material used for a negative electrode. The natural graphite had an average particle diameter of 15 µm, and the amorphous carbon had a thickness of 5 nm. For the binder, styrene-butadiene rubber and carboxymethyl cellulose were used. The weight composition of the negative electrode active material was 97%, and the weight composition of the binder was 3% (weight ratio between rubber and cellulose was 1:1). A slurry consisting of the negative electrode active material and the binder conductive agent was applied with a blade coater to prepare a negative electrode. Water was used as a solvent of the slurry.

Table 1 illustrates a battery in which the ceramic layer of the present invention is added to the negative electrode. Negative electrodes were prepared according to the specifications of the ceramic layer illustrated in the table, and the lithium ion batteries of FIG. 1 were prepared.

An initial capacity measured at a charge/discharge rate of one hour rate is indicated in the second column from the right in Table 1. The rated capacity of a battery was set to 5 Ah, and initial aging was performed. The conditions were as follows. That is, first, a battery was charged at a charge current of 5 A until the battery voltage reached 4.2 V. After the voltage reached 4.2 V, charge was continuously performed until the current decreased to 0.1 A while the voltage of 4.2 V was maintained. Subsequently, after 30 minutes of pause, discharge was performed at a discharge current of 5 A until the battery voltage reached 2.8 V. The initial capacity is a discharge capacity measured under the above-described conditions.

The battery temperature at the right end in Table 1 is a maximum reaching temperature obtained by piercing a nail from a side surface of a container of the battery with a charge depth of 100% and measuring a battery surface temperature.

For each of batteries 1 to 7 and 12 to 17, a ceramic layer was prepared by thermosetting. For each of batteries 8 to 11, 0.1% by weight Irgacure (registered trademark) 184 was added with respect to the weight of a ceramic slurry, and then the resulting mixture was irradiated with ultraviolet light having a wavelength of 310 to 350 nm to prepare a ceramic layer.

### (Comparative Example)

Table 2 illustrates evaluation results of the lithium-ion battery illustrated in FIG. 1, in which a ceramic layer was prepared on a negative electrode under conditions outside the scope of the present invention. Initial aging conditions and battery temperature measuring conditions are as described in Examples.

**[Table 1]**

| Battery | Ceramic particles | Average particle diameter (µm) | Number of functional groups in acrylic monomer | Amount of acrylic monomer to be added (% by weight) | Thickness of ceramic layer (µm) | Initial capacity (Ah) | Battery temperature (°C) |
|---|---|---|---|---|---|---|---|
| 1 | Alumina | 0.1 | 1 | 5 | 10 | 4.7 | 130 |
| 2 | Alumina | 1 | 1 | 5 | 10 | 4.7 | 125 |
| 3 | Alumina | 2.5 | 1 | 5 | 10 | 4.7 | 119 |
| 4 | Alumina | 5 | 1 | 5 | 10 | 4.7 | 120 |
| 5 | Alumina | 7 | 1 | 5 | 10 | 4.7 | 127 |
| 6 | Alumina | 1 | 1 | 5 | 5 | 4.9 | 1 133 |
| 7 | Boehmite | 1 | 1 | 5 | 5 | 4.9 | 135 |
| 8 | Alumina | 5 | 1 | 5 | 8 | 4.8 | 121 |
| 9 | Boehmite | 5 | 1 | 5 | 8 | 4.8 | 123 |
| 10 | Zirconia | 5 | 1 | 5 | 8 | 4.8 | 125 |
| 11 | Silica | 5 | 1 | 5 | 8 | 4.8 | 125 |
| 12 | Alumina | 1 | 2 | 5 | 5 | 4.9 | 112 |
| 13 | Boehmite | 1 | 2 | 5 | 5 | 4.9 | 111 |
| 14 | Alumina | 1 | 3 | 5 | 5 | 4.9 | 110 |
| 15 | Alumina | 1 | 3 | 1 | 5 | 4.9 | 137 |
| 16 | Alumina | 1 | 2 | 7 | 5 | 4.9 | 121 |
| 17 | Alumina | 1 | 2 | 10 | 5 | 4.9 | 118 |

**[Table 2]**

| Battery | Ceramic particles | Average particle diameter (µm) | Number of functional groups in acrylic monomer | Amount of acrylic monomer to be added (% by weight) | Thickness of ceramic layer (µm) | Initial capacity (Ah) | Battery temperature (°C) |
|---|---|---|---|---|---|---|---|
| 21 | Alumina | 10 | 1 | 5 | 20 | 4.2 | 120 |
| 22 | Alumina | 1 | 2 | 15 | 5 | 4.4 | 122 |
| 23 | Alumina | 3 | 1 | 5 | 8 | 4.7 | 100 |
| 24 | Boehmite | 3 | 1 | 5 | 8 | 4.8 | 150 |
| 25 | Zirconia | 3 | 1 | 5 | 8 | 4.8 | 143 |
| 26 | Silica | 3 | 1 | 5 | 8 | 4.8 | 148 |

### (Comparison between Examples and Comparative Examples)

According to the results of batteries 1 to 5 in Table 1, the initial capacity was approximately 5 Ah, and the maximum battery temperature was as low as 130°C or lower when the average particle diameter of alumina was 0.1 to 7 µm. Comparison with battery 21 of Comparative Example indicates that an upper limit of the average particle diameter is 7 µm.

According to the results of batteries 3 and 4, when the thickness of the ceramic layer was set to 2 to 4 times the average particle diameter of the ceramic particles, the battery temperature was lowered. This result indicates that presence of 2 to 4 particles in the ceramic layer improved heat resistance of the ceramic layer.

According to batteries 6 and 7, when the thickness of the ceramic layer was 5 µm, the initial capacity was large, and the maximum temperature of the battery could be 135°C or lower.

According to the results of batteries 8 to 11, even by ultraviolet curing, the initial capacity was large, and the maximum temperature of a battery could be lowered. It was also found that boehmite, zirconia, and silica could be applied as ceramic particles. Comparison with the results of batteries 23 to 26 of Comparative Examples indicates that it is effective to set the particle diameters of the ceramic particles to 5 µm or more.

According to the results of batteries 12 to 14, by increasing the number of functional groups to 2 or 3, the battery temperature could be further lowered.

According to the results of batteries 15 to 17, the initial capacity could be increased, and the battery temperature could be lowered when the binder amount was 1 to 10% by weight. Comparison with battery 22 of Comparative Example makes the effect apparent.

The present invention will be briefly summarized above. The secondary battery according to the present invention includes an electrode having a mixture layer and a heat resistant layer disposed on the mixture layer and containing ceramic particles. The heat resistant layer includes a crosslinked resin, and the amount of the crosslinked resin is less than 10% by weight with respect to the sum of the amount of the ceramic particles and the amount of the crosslinked resin. With such a configuration, the secondary battery has heat resistance of several hundred degrees or higher even if a short circuit between a positive electrode and a negative electrode locally occurs, and can effectively suppress a short circuit between the positive electrode and the negative electrode. In addition, by adopting this configuration, it is possible to provide a secondary battery with high initial capacity and low battery temperature.

In the secondary battery according to the present invention, the amount of the crosslinked resin is preferably 1 to 5% by weight with respect to the sum of the amount of the ceramic particles and the amount of the crosslinked resin.

In the secondary battery according to the present invention, the average particle diameter of the ceramic particles is 5 µm or more. With such a configuration, scattering of ultraviolet light can be promoted well with ceramic particles, and therefore an acrylic monomer can be sufficiently cured by ultraviolet rays.

In the secondary battery according to the present invention, the thickness of the heat resistant layer is preferably 2 to 4 times the average particle diameter of the ceramic particles for ultraviolet curing.

In the secondary battery according to the present invention, the crosslinked resin includes at least one of an acrylic resin and an imide resin.

In the secondary battery according to the present invention, the crosslinked resin is an ester bond. Since the ester bond is a strong bond, the ester bond contributes to improvement of heat resistance.

Examples of the present invention have been described in detail above. However, the present invention is not limited to the above-described Examples, and various changes in design may be made without departing from the spirit of the present invention described in claims. For example, the above-described embodiment has been described in detail in order to explain the present invention so as to be understood easily. The present invention does not necessarily include all the components described above. It is possible to replace some components of an Example with components of another Example. It is also possible to add some components of an Example to another Example. Furthermore, some components of an Example can be deleted or replaced by other components, or another component can be added thereto.

### Reference Signs List

- 101, 401a, 401b: Lithium-ion secondary battery
- 102, 402: Battery container
- 103, 403: Battery lid
- 104, 404: Positive electrode external terminal
- 105, 405: Negative electrode external terminal
- 106, 406: Safety valve
- 107, 407: Positive electrode
- 108, 408: Negative electrode
- 109, 409: Separator
- 110: Positive electrode lead wire
- 111: Negative electrode lead wire
- 112, 412: Insulating member
- 108a: Negative electrode current collector
- 108b: Negative electrode mixture layer
- 108c: Negative electrode active material
- 108d: Binder
- 108e: Ceramic layer
- 413, 414, 415, 417, 418: Power cable
- 416: Charge/discharge controller
- 419: External load (motor)

## Claims

1. A secondary battery comprising: an electrode having a mixture layer; and a heat resistant layer disposed on the mixture layer and containing ceramic particles, wherein
the heat resistant layer includes a crosslinked resin, and an amount of the crosslinked resin is less than 10% by weight with respect to a sum of an amount of the ceramic particles and an amount of the crosslinked resin.

2. The secondary battery according to claim 1, wherein
the amount of the crosslinked resin is 1 to 5% by weight with respect to the sum of the amount of the ceramic particles and the amount of the crosslinked resin.

3. The secondary battery according to claim 1 or 2, wherein
the ceramic particles have an average particle diameter of 5 µm or more.

4. The secondary battery according to any one of claims 1 to 3, wherein
a thickness of the heat resistant layer is 2 to 4 times an average particle diameter of the ceramic particles.

5. The secondary battery according to any one of claims 1 to 4, wherein
the crosslinked resin contains at least one of an acrylic resin and an imide resin.

6. The secondary battery according to any one of claims 1 to 5, wherein
the crosslinked resin has an ester bond.
